# EUROPÄISCHE PATENTANMELDUNG

(11) **EP 1 061 740 A1**
(43) Veröffentlichungstag der Anmeldung: **20.12.2000**
(21) Anmeldenummer: 99111800.1
(22) Anmeldetag: 18.06.1999
(51) Int. Cl.: H04N 7/088, H04N 5/445

(54) **Verfahren zur Erzeugung eines Informationssignals**

(71) Anmelder: Ernst, Melanie, 80638 München (DE)
(72) Erfinder: Ernst, Melanie, 80638 München (DE)
(74) Vertreter: Manitz, Finsterwald & Partner

(57) **Zusammenfassung**

Die Erfindung betrifft ein Verfahren zur Erzeugung eines über ein Fernsehgerät (3) ausstrahlbaren Informationssignals (7), wobei das Inforrnationssignal (7) während einer Betriebszeit zumindest dem Videoanteil eines zugeordneten Fernsehsignals (1) beigemischt wird, und wobei das Informationssignal (7) während wenigstens eines Vordergrund-Zeitintervalls innerhalb der Betriebszeit eine Information über eine zeitgleich mit der Verfügbarkeit des zugeordneten Fernsehsignals (1) stattfindende Versteigerung enthält.

## Beschreibung

Die Erfindung betrifft ein Verfahren zur Erzeugung eines über ein Fernsehgerät ausstrahlbaren Informationssignals.

Informationssignale, die an einem Fernsehgerät ausgestrahlt bzw. dargestellt und abgespielt werden können, sind auf vielfältige Weise erzeugbar. Beispielsweise werden als Informationssignale vertonte Spielfilme oder Videotextseiten in Form von Analog-Funksignalen zu einem Fernsehgerät übertragen und an diesem zur Darstellung gebracht. In diesem Zusammenhang sind inzwischen auch Computer mit Monitor als Fernsehgerät anzusehen, da diese ebenfalls die genannten Informationssignale empfangen und darstellen können. Die bestehenden technischen Möglichkeiten zur Erzeugung und Ausstrahlung von Informationssignalen an Fernsehgeräten werden jedoch doch noch nicht völlig ausgeschöpft.

Es ist eine Aufgabe der Erfindung, ein Verfahren zu schaffen, durch das die Möglichkeiten zur Erzeugung und Ausstrahlung von Informationssignalen an Fernsehgeräten besser nutzbar gemacht werden.

Diese Aufgabe wird durch ein Verfahren gelöst, bei dem das Informationssignal während einer Betriebszeit zumindest dem Videoanteil eines zugeordneten Fernsehsignals beigemischt wird, und bei dem das Informationssignal während wenigstens eines Vordergrund-Zeitintervalls innerhalb der Betriebszeit eine Information über eine zeitgleich mit der Verfügbarkeit des zugeordneten Fernsehsignals stattfindende Versteigerung enthält.

Es ist also vorgesehen, das zu erzeugende bzw. auszustrahlende Informationssignal in das zugeordnete Fernsehsignal zu integrieren. Es ist ausreichend, wenn dieses Beimischen des Informationssignals in das Fernsehsignal innerhalb des Fernsehgeräts erfolgt. Wichtig ist jedoch, daß der Fernsehzuschauer am Fernsehgerät Zugriff sowohl auf das Fernsehsignal als auch auf das Informationssignal erhält.

Die Betriebszeit, während der das Informationssignal dem Fernsehsignal beigemischt wird, kann natürlich von dem Betreiber bzw. Erzeuger des Informationssignals bestimmt werden. Je nach technischer Ausstattung kann es jedoch auch dem Fernsehzuschauer überlassen werden, zu welchen Betriebszeiten das Informationssignal in das Fernsehsignal seines Fernsehgeräts integriert wird.

Es ist ein wesentlicher Aspekt der Erfindung, daß in dem Informationssignal während des innerhalb der Betriebszeit gelegenen Vordergrund-Zeitintervalls eine Information über eine parallel stattfindende Versteigerung enthalten ist. Eine solche Information kann nämlich für den Fernsehzuschauer eine besonders starke Motivation bedeuten, den Empfang eines bestimmten Fernsehsignals bzw. Fernsehprogramms zu einer bestimmten Zeit überhaupt anzuwählen. Inwieweit das Informationssignal an dem Fernsehgerät tatsächlich dargestellt wird, wird dabei vorzugsweise der freien Entscheidung des Zuschauers überlassen. Allerdings weckt die Information über eine live stattfindende Versteigerung hieran natürlich ein besonders hohes Interesse seitens des Zuschauers.

Eine besonders einfache Realisierung des erläuterten Verfahrens ergibt sich, wenn das zu erzeugende und auszustrahlende Informationssignal durch eine Videotextseite gebildet ist, die auf bekannte Weise einem bestimmten Fernsehsender und somit einem verfügbaren Fernsehsignal zugeordnet ist, und die vom Zuschauer beispielsweise durch ein entsprechendes Kommando einer Fernbedienung aufgerufen werden kann. In diesem Fall erfolgt die Erzeugung des Informationssignals gemeinsam mit der Erzeugung des zugeordneten Fernsehsignals, da diese beiden Signale üblicherweise als ein Gesamtsignal zu den Fernsehgeräten übertragen werden. Der Zuschauer kann jederzeit die Betriebszeit des Informationssignals, also die Beimischung des Informationssignals in das an seinem Fernsehgerät ausgestrahlte Fernsehsignal, für sein Fernsehgerät aktivieren, indem er die betreffende Videotextseite zuschaltet.

Das Informationssignal kann auch - ähnlich dem Videosignal einer Videotextseite - in das vertikale Synchronisationssignal des zugeordneten Fernsehsignals integriert werden, um auf diese Weise gemeinsam mit dem Fernsehsignal zu dem betreffenden Fernsehgerät übertragen werden zu können.

Alternativ ist es auch möglich, das Informationssignal als ein digitales Datensignal zu erzeugen, das über ein Datennetz, insbesondere das Internet zu dem Fernsehgerät übertragen wird. Diese Übertragung des digitalen Informationssignals kann auch unabhängig von der üblicherweise analogen Übertragung des zugeordneten Fernsehsignals zu dem Fernsehgerät erfolgen. In diesem Fall erfolgt eine Zuordnung zwischen Fernsehsignal und Informationssignal zumindest in zeitlicher Hinsicht, wie nachstehend noch erläutert wird. Die Erzeugung des Informationssignals als digitales Datensignal findet besonders vorteilhafte Anwendung, wenn ein Computer zum Empfang bzw. zur Darstellung des Fernsehsignals verwendet wird. In diesem Fall kann gleichzeitig eine Adresse bzw. eine Seite des World Wide Web (WWW) aufgerufen und als Informationssignal dem Fernsehsignal beigemischt werden. Diese Beimischung erfolgt spätestens am Fernsehgerät und kann beispielsweise durch übliche Videoprozessoren erfolgen.

Für das erläuterte Verfahren ist es bevorzugt, wenn das Vordergrund-Zeitintervall - also das Zeitintervall, in dem das Informationssignal eine Information über eine Versteigerung enthält - in Abhängigkeit von dem Verlauf der Fernsehsendung gewählt wird, die aufgrund des zugeordneten Fernsehsignals an dem Fernsehgerät ausgestrahlt wird. Mit anderen Worten soll die Information über die Versteigerung nur während solcher Zeitintervalle an dem Fernsehgerät ausgestrahlt werden können, in denen ein geeigneter Zusammenhang mit dem zugeordneten Fernsehsignal besteht. Der Beginn und/oder das Ende des Vordergrund-Zeitintervalls können dabei auch automatisch ausgewählt werden, was die Durchführung des Verfahrens natürlich vereinfacht.

Besonders vorteilhaft ist es, wenn zwischen dem Informationssignal und dem Fernsehsignal eine zeitliche Zuordnung derart besteht, daß die Information über die zeitgleich stattfindende Versteigerung im wesentlichen immer dann erzeugt bzw. ausgestrahlt wird, wenn das zugeordnete Fernsehsignal einer Werbesendung entspricht. Durch diese Maßnahme kann die Motivation des Zuschauers, die Beimischung des Informationssignals in das zugeordnete Fernsehsignal an seinem Fernsehgerät zu aktivieren oder auszuwählen, noch weiter erhöht werden.

Beispielsweise kann der Zuschauer eine einen Spielfilm unterbrechende Werbepause dazu nutzen, an der Versteigerung teilzunehmen oder diese mitzuverfolgen, während er dadurch gleichzeitig die Werbepause überbrückt. Hierbei ist es natürlich von Vorteil, wenn das Vordergrund-Zeitintervall gleichzeitig oder spätestens mit dem Ende der Werbepause endet, so daß der Zuschauer ohne weiteres Zutun den Spielfilm weiterverfolgen kann, ohne von diesem etwas versäumt zu haben.

Es ist bevorzugt, wenn das Informationssignal während der Vordergrund-Zeitintervalle den Videoanteil des zugeordneten Fernsehsignals hinsichtlich der Fläche der Darstellung der Versteigerung an dem Fernsehgerät vollständig überdeckt. Allerdings kann auch ein teilweises Ausfüllen des Bildschirms des Fernsehgerätes, beispielsweise zu 70 %, ausreichen, sofern die gesamte auszustrahlende Information über die Versteigerung auf dem betreffenden Teil des Bildschirms dargestellt werden kann.

Zudem ist es möglich, dem Fernsehsignal während der gesamten Betriebszeit oder zumindest während der Vordergrund-Zeitintervalle auch hinsichtlich des Audioanteils das Informationssignal beizumischen und somit sowohl den Video- als auch den Audioanteil des Fernsehsignals mit dem Informationssignal zu überdecken.

Die erläuterte Aufgabe wird gemäß einer zweiten Ausführungsform der Erfindung auch durch ein Verfahren zur Erzeugung eines über ein Fernsehgerät ausstrahlbaren Informationssignals gelöst, bei dem das Informationssignal während einer Betriebszeit zumindest dem Videoanteil eines zugeordneten Fernsehsignals beigemischt wird, bei dem ferner das Informationssignal während wenigstens eines Vordergrund-Zeitintervalls innerhalb der Betriebszeit den Videoanteil des zugeordneten Fernsehsignals teilweise oder vollständig überdeckt, bei dem außerdem als Vordergrund-Zeitintervall ein solches Zeitintervall gewählt wird, zu dem das zugeordneten Fernsehsignal einer Werbesendung entspricht, und bei dem das Informationssignal während des Vordergrund-Zeitintervalls eine Unterhaltungs- oder Nachrichteninformation, insbesondere eine Information über ein aktuelles sportliches, gesellschaftliches oder politisches Ereignis, enthält.

Auch bei dieser Ausführungsform ist das Informationssignal also einem Fernsehsignal zugeordnet, dessen Darstellung bzw. Ausstrahlung an dem Fernsehgerät das Informationssignal zeitweise, nämlich während der Vordergrund-Zeitintervalle, überdeckt. Diese Vordergrund-Zeitintervalle entsprechen zumindest im wesentlichen den Werbepausen des zugeordneten Fernsehsignals.

Auch bei dieser Ausführungsform kann die Aktivierung der Betriebszeit des Informationssignals bzw. der Ausstrahlung des Informationssignals an dem Fernsehgerät der Entscheidung des Zuschauers überlassen werden, während das Vordergrund-Zeitintervall innerhalb der Betriebszeit vorzugsweise automatisch aktiviert und deaktiviert wird. Damit der Zuschauer sich möglichst oft für die Ausstrahlung des Informationssignals entscheidet, enthält dieses zumindest während des Vordergrund-Zeitintervalls eine Unterhaltungs- oder Nachrichteninformation, welche die Werbeinformation des Fernsehsignals überdeckt bzw. überbrückt.

Auch bei dieser zweiten Ausführungsform des erfindungsgemäßen Verfahrens können die weiteren Merkmale verwirklicht werden, die im Zusammenhang mit der ersten Ausführungsform erläutert wurden. Insbesondere kann das Informationssignal als Videotextseite oder als Internet-Seite erzeugt werden.

Im übrigen ist es bei beiden Ausführungsformen der Erfindung möglich, eine im wesentlichen ständig andauernde Betriebszeit vorzusehen, während die Aktivierung des Vordergrund-Zeitintervalls allein der Wahl des Zuschauers - und insbesondere entkoppelt von Werbepausen innerhalb des zugeordneten Fernsehsignals - überlassen bleiben kann.

Weitere Ausführungsformen der Erfindung sind in den Unteransprüchen aufgeführt.

Die Erfindung wird nachfolgend beispielhaft unter Bezugnahme auf die Zeichnungen erläutert, die jeweils die Darstellung eines Fernsehsignals bzw. eines Informationssignals an einem Fernsehgerät zeigen.

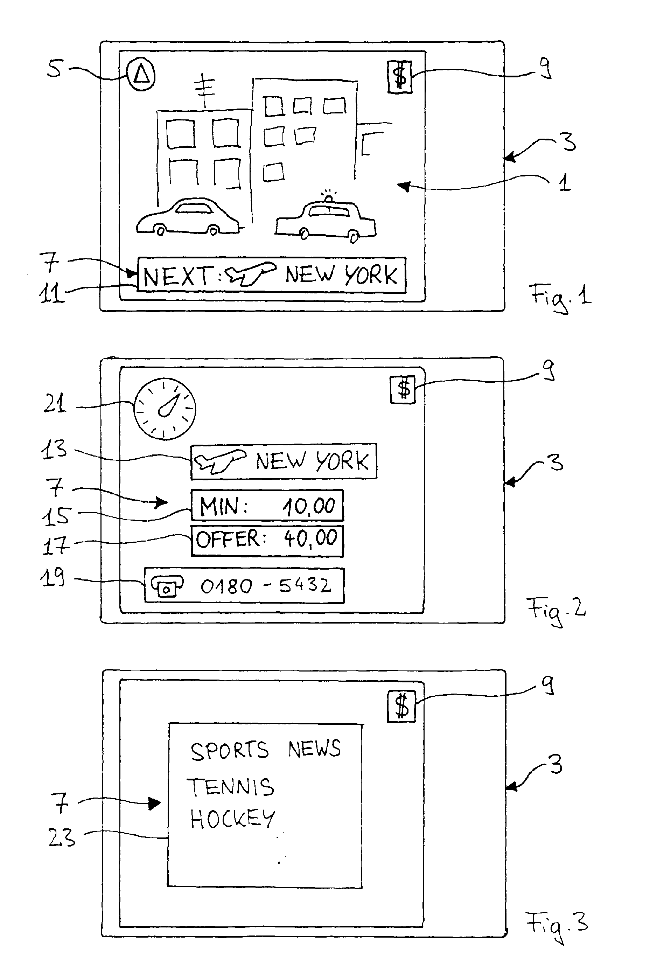

Fig. 1 zeigt die Darstellung eines Fernsehsignals 1 in Form eines Spielfilms auf dem Bildschirm eines Fernsehgeräts 3. Das Fernsehsignal 1 enthält eine Senderkennung 5, die als Logo des betreffenden Fernsehsenders in der oberen linken Bildecke erscheint.

Dem in Fig. 1 gezeigten Fernsehsignal 1 ist außerdem ein Informationssignal 7 beigemischt. Zu dem in Fig. 1 dargestellten Zeitpunkt läuft ein Hintergrund-Zeitintervall, also ein Abschnitt der Betriebszeit des Informationssignals 7, in dem das zugeordnete Fernsehsignal 1 nicht einer Werbesendung entspricht.

Das Informationssignal 7 erscheint während dieses Hintergrund-Zeitintervalls im wesentlichen transparent, so daß das Fernsehsignal 1 fast vollständig sichtbar ist. Für den Zuschauer erkennbar ist das Informationssignal 7 zum einen lediglich als ein Kennungssymbol 9 in einer rechten Bildschirmecke des Fernsehgerätes 3. Das Informationssignal 7 muß das Kennungssymbol 9 jedoch nicht zwingend enthalten, sondern kann stattdessen bezüglich des Fernsehsignals 1 auch zu 100 % transparent erscheinen.

Zum anderen kann das dem Fernsehsignal 1 beigemischte Informationssignal 7 während des Hintergrund-Zeitintervalls durch ein Einblendsignal 11 erkennbar sein. Dieses erscheint an dem Bildschirm des Fernsehgerätes 3 beispielsweise als ein Ankündigungstext bezüglich des Gegenstands einer nachfolgenden Versteigerung. Die Beimischung des Einblendsignals 11 in das Fernsehsignal 1 während eines Hintergrund-Zeitintervalls ist ebenfalls nicht unbedingt erforderlich und kann auch lediglich zeitweise erfolgen. Auch kann als zumindest zeitweise beigemischtes Einblendsignal 11 eine Unterhaltungs- oder Nachrichteninformation, beispielsweise als Textzeile oder als Textlaufbalken vorgesehen sein.

Falls der über das Fenstersignal 1 an dem Fernsehgerät 3 ausgestrahlte Spielfilm durch eine Werbepause unterbrochen wird, wird ein Vordergrund-Zeitintervall begonnen, in welchem dem Fernsehsignal 1 ein anderes als das in Fig. 1 gezeigte Informationssignal 7 beigemischt wird.

Gemäß der ersten Ausführungsform der Erfindung repräsentiert das Informationssignal 7 innerhalb des Vordergrund-Zeitintervalls eine Versteigerung, deren Ablauf mit dem Anfang des Vordergrund-Zeitintervalls beginnt und an welcher der Fernsehzuschauer selbst teilnehmen kann.

Fig. 2 zeigt die Darstellung des eine solche Versteigerung repräsentierenden Informationssignals 7 an dem Bildschirm des Fernsehgeräts 3. Dieses Informationssignal 7 überdeckt in seiner Darstellung am Bildschirm den Videoanteil des Fernsehsignals 1 vollständig.

Das Informationssignal 7 enthält eine Textinformation 13 über den Versteigerungsgegenstand, beispielsweise ein Flugticket nach New York. Die Textinformation 13 kann außerdem eine Kennziffer enthalten, um bei einer Teilnahme des Zuschauers an der Versteigerung die Identifizierung des Versteigerungsgegenstandes zu erleichtern.

Außerdem enthält das Informationssignal 7 gemäß Fig. 2 eine Textinformation 15 über das Mindestgebot und eine Textinformation 17 über das aktuelle Gebot der Versteigerung. Als weitere Textinformationen 19 wird mit dem Informationssignal 7 eine Telefonnummer oder eine E-mail-Adresse eingeblendet, über die der Zuschauer an der laufenden Versteigerung teilnehmen kann.

Der Fernsehzuschauer kann ab Beginn des Vordergrund-Zeitintervalls bzw. des Werbeblocks innerhalb der zugeordneten Fernsehsendung an der Versteigerung teilnehmen, indem er die eingeblendete Zugangsnummer oder -adresse 19 anwählt und sein eigenes Gebot für den Versteigerungsgegenstand 13 abgibt. Dabei sind dem Zuschauer das Mindestgebot 15 und das aktuelle Gebot 17 von der Darstellung am Fernsehgerät 3 bekannt.

Die Anzeige 17 des aktuellen Gebots ändert sich ständig entsprechend dem jeweils höchsten momentanen Gebot der Zuschauer. Das Informationssignal 7 wird also während eines Vordergrund-Zeitintervalls bezüglich der Textinformation 17 über das aktuelle Gebot in Abhängigkeit von dem Verlauf der Versteigerung ständig aktualisiert.

Der Reiz für den Zuschauer zur Teilnahme an der Versteigerung wird dadurch erhöht, daß die Dauer der Versteigerung und somit die Gültigkeit des aktuellen Gebots 17 nicht von vornherein bekannt sind. Die Dauer der Versteigerung ist nämlich an die Dauer des Werbeblocks des zugeordneten Fernsehsignals 1 gebunden. Mit anderen Worten wird das Vordergrund-Intervall des Informationssignals 7 beendet und es wird ein neues Hintergrund-Zeitintervall begonnen, sobald der in Fig. 1 gezeigte Spielfilm wieder anläuft.

Um dem Zuschauer dennoch eine Vorstellung darüber zu geben, wie gut die Aussichten sind, daß das aktuelle Gebot 17 das letztlich gültige Gebot sein wird, ist in das Informationssignal 7 außerdem ein Zeitinformationssignal 21 integriert, das an dem Bildschirm des Fernsehgeräts 3 beispielsweise als Uhr erscheint, welche die seit dem Beginn der Versteigerung bzw. des Vordergrund-Zeitintervalls verstrichene Zeit anzeigt. Da der Zuschauer aus Erfahrung weiß, daß ein Werbeblock ungefähr drei bis sieben Minuten dauert, entsteht über die Zeitinformation 21 bzw. die dargestellte Uhr eine besondere Spannung seitens des Zuschauers.

Wie aus Fig. 2 ersichtlich, enthält das Informationssignal 7 weiterhin ein Kennungssignal, das an dem Fernsehgerät 3 als das Kennungssymbol 9 gemäß Fig. 1 erscheint.

Wie bereits erläutert, kann die Erfindung vorteilhaft einfach dadurch realisiert werden, daß das dem Fernsehsignal beizumischende Informationssignal in eine Videotextseite integriert wird, die der Zuschauer auf bekannte Weise - beispielsweise durch einen entsprechenden Befehl einer Handfernbedienung - zur Ausstrahlung an seinem Fernsehgerät aufrufen kann. Hierbei kann eine einprägsame Nummer der Videotext-Seite gewählt werden, z.B. "777". Falls diese charakteristische Nummer direkt in das Kennungssymbol 9 integriert wird, welches bei Aufrufen der betreffenden Videotextseite am Bildschirm erscheint, wird ein besonders schnelles Assoziieren beim Zuschauer erreicht. In dieser Hinsicht ist es auch von Vorteil, wenn bei Anbieten des Versteigerungs-Informationssignals zu verschiedenen Fernsehsignalen bzw. Fernsehsendern die jeweils zugeordneten Videotextseiten alle dieselbe Nummer haben.

Das erfindungsgemäße Verfahren bietet ferner den Vorteil, daß eine weitgehende oder auch vollständige Automatisierung möglich ist:

Der Beginn und das Ende eines Vordergrund-Zeitintervalls - und dementsprechend des hierzu komplementären Hintergrund-Zeitintervalls - können automatisch gesteuert werden, nämlich indem das Logo der Senderkennung 5 innerhalb des Fernsehsignals 1 beobachtet wird. Üblicherweise enthält das Fernsehsignal 1 außerhalb der Werbepausen nämlich immer die Senderkennung 5, die auf dem Bildschirm des Fernsehgeräts 3 als Logo des betreffenden Fernsehsenders erscheint. Diese Senderkennung 5 bzw. dieses Logo entfällt innerhalb der Werbepausen. Mittels einer einfachen elektronischen Schaltung, welche die Senderkennung 5 innerhalb des Fernsehsignals 1 beobachtet, kann also das Vorliegen einer Werbepause erkannt und gegebenenfalls die Information über die Versteigerung in das Informationssignal einbezogen oder diesem wieder entnommen werden.

Auch die Abwicklung der Versteigerung über das Telefon kann weitestgehend automatisch mittels bekannter Telefon-/ Sprachcomputer erfolgen. Eine typische Teilnahme eines Zuschauers an einer computergesteuerten Versteigerung kann beispielsweise folgendermaßen ablaufen:
Der Zuschauer wählt die mit der Textinformation 19 angegebene Telefonnummer.
   - Ansage:: "Willkommen bei der Versteigerung. Bitte geben Sie die Kennziffer des gewünschten Angebots mit Ihrer Telefontastatur ein oder nennen Sie deutlich die einzelnen Zahlen".
Der Zuschauer gibt die Kennziffer ein, beispielsweise "361".
   - Ansage:: "Sie möchten den Flug nach New York ersteigern. Das aktuelle Gebot liegt bei 40,00. Wenn Sie dieses Gebot um 10,00 erhöhen wollen, drücken Sie jetzt bitte die 1 oder sagen Sie JA."
Der Zuschauer gibt ein: "1"
   - Ansage:: "Danke für Ihr Gebot. Sie haben 50,00 geboten. Das aktuelle Gebot liegt inzwischen bei 70,00. Wenn Sie das Gebot von 70,00 um weitere 10,00 erhöhen wollen, drükken Sie jetzt bitte die 1 oder sagen Sie JA."
Der Zuschauer gibt ein: "1"
   - Ansage:: "Danke für Ihr Gebot. Sie haben 80,00 geboten."
Der Werbeblock und somit die Versteigerung sind zu Ende.
   - Ansage (1. Möglichkeit):: "Wir gratulieren! Sie haben den Flug nach New York für 80,00 ersteigert. Bitte geben Sie nach dem Ton deutlich Ihre Adresse an oder drücken Sie die 2, um mit einem Service-Mitarbeiter verbunden zu werden."
   - Ansage (2. Möglichkeit):: "Leider kam Ihr Gebot zu spät. Das Gebot von 90,00 hat den Zuschlag erhalten. Bitte versuchen Sie es bei der nächsten Versteigerung wieder."

Um den Zuschauer beim Betrachten einer Fernsehsendung dazu zu motivieren, das Informationssignal aufzurufen bzw. zuzuschalten, können alternativ oder zusätzlich zu der Ankündigung über das Einblendsignal 11 die attraktivsten zu versteigernden Gegenstände bereits in der Tagespresse veröffentlicht bzw. angekündigt werden. Vorzugsweise wird dabei noch nicht verraten, in welchem Werbeblock und bei welchem Fernsehsender die angekündigten Angebote versteigert werden. Die individuellen Angebote werden erst am Anfang eines Vordergrund-Zeitintervalls bzw. Werbeblocks oder unmittelbar zuvor über das Einblendsignal 11 bekannt gegeben.

Bevorzugt wird bei jeder Versteigerung ein anderer Gegenstand angeboten. Selbstverständlich können gleichzeitig mehrere Versteigerungen stattfinden, die verschiedenen Fernsehsignalen 1 bzw. Fernsehsendern zugeordnet sind. Um hierbei Verwechslungen zu vermeiden, ist dem jeweiligen Versteigerungsgegenstand eine Kennziffer zugeordnet, und für die Teilnahme an den Versteigerungen werden Telephonnummern 19 oder sonstige Zugangsadressen mit jeweils unterschiedlichen Endziffern angegeben.

Es ist auch möglich, während eines einzigen Vordergrund-Zeitintervalls bzw. Werbeblocks eines Fernsehsenders mehrere Gegenstände gleichzeitig zu versteigern. In diesem Fall wird die Textinformation 13, 15, 17, 19 über den Versteigerungsgegenstand, das Mindestgebot, das aktuelle Gebot bzw. die entsprechende Telefonnummer entsprechend mehrfach in das Informationssignal 7 integriert bzw. an dem Fernsehgerät 3 ausgestrahlt.

Wie bereits erwähnt, beginnt mit dem Ende des betreffenden Werbeblocks ein neues Hintergrund-Zeitintervall für das Informationssignal 7, so daß dieses an dem Fernsehgerät 3 beispielsweise wiederum lediglich als Kennungssymbol 9 erscheint, wie in Fig. 1 gezeigt. Falls sich an den nun fortgesetzten Spielfilm (Fig. 1) ein weiterer Werbeblock anschließt, kann ein neues Vordergrund-Zeitintervall des Informationssignals 7 begonnen werden, in dem eine weitere Versteigerung durchgeführt wird.

Es ist jedoch auch möglich, in diesem nachfolgenden oder in irgendeinem Vordergrund-Zeitintervall dem Fernsehsignal 1 ein Informationssignal 7 gemäß der zweiten Ausführungsform der Erfindung beizumischen, das für den Zuschauer von besonderem speziellen Interesse ist. Beispielsweise kann das Informationssignal 7 - wie in Fig. 3 gezeigt - während der Vordergrund-Zeitintervalle Unterhaltungs- oder Nachrichteninformation aus den Bereichen Sport, Gesellschaft oder Politik aufweisen. Auf diese Weise kann der Zuschauer den Werbeblock überbrücken, indem er diese dem Fernsehsignal 1 überlagerte Unterhaltungs- oder Nachrichteninformation 23 verfolgt.

Ein besonderer Vorteil dieses Verfahren besteht darin, daß der Zuschauer nicht unbedingt manuell die Unterhaltungs- oder Nachrichteninformation abrufen muß, beispielsweise durch Aufrufen einer Videotextseite. Stattdessen kann der Zuschauer die Betriebszeit des Informationssignals 7 an seinem Fernsehgerät 3 dauerhaft aktivieren, so daß er während der Werbeblöcke innerhalb des zugeordneten Fernsehsignals 1 automatisch in den Genuß der Unterhaltungs- oder Nachrichteninformation kommt.

Es ist möglich, dem Zuschauer hinsichtlich der einen Werbeblock überbrückenden Unterhaltungs- oder Nachrichteninformation eine Vielzahl verschiedener Unterhaltungs- bzw. Nachrichtenbereiche anzubieten, beispielsweise Fußballergebnisse oder Lokalpolitik. Hierfür wird diesen verschiedenen Bereichen jeweils eine eigene Videotextseite oder Internet-Seite zugewiesen, die dem zugeordneten Fernsehsignal beigemischt wird. Für die verschiedenen Bereiche der Unterhaltungs- oder Nachrichteninformation 23 können verschiedene Videotextseiten bzw. Internet-Seiten vorgesehen sein, die vorzugsweise eine aufeinanderfolgende Numerierung aufweisen, um das Auffinden für den Zuschauer zu erleichtern. Um eine schnelle Identifizierung des Zuschauers mit diesem besonderen Service zu ermöglichen, kann jede derartige an dem Fernsehgerät 3 dargestellte Unterhaltungs- oder Nachrichteninformation 23 mit dem charakteristischen Kennungssymbol 9 gekennzeichnet werden, wie in Fig. 3 gezeigt.

Selbstverständlich ist es möglich, die beiden erläuterten Ausführungsformen der Erfindung, also die Beimischung eines Versteigerungs-Informationssignals 7 bzw. eines Unterhaltungs-/Nachrichten-Informationssignals 7 in das Fernsehsignal 1, beliebig zu kombinieren.

### Bezugszeichenliste

- 1: Fernsehsignal
- 3: Fernsehgerät
- 5: Senderkennung
- 7: Informationssignal
- 9: Kennungssymbol
- 11: Einblendsignal
- 13: Textinformation über Versteigerungsgegenstand
- 15: Textinformation über Mindestgebot
- 17: Textinformation über aktuelles Gebot
- 19: Textinformation über Telefonnummer
- 21: Zeitinformationssignal
- 23: Unterhaltungs- oder Nachrichteninformation

## Patentansprüche

1. Verfahren zur Erzeugung eines über ein Fernsehgerät (3) ausstrahlbaren Informationssignals (7),
wobei das Informationssignal (7) während einer Betriebszeit zumindest dem Videoanteil eines zugeordneten Fernsehsignals (1) beigemischt wird, und
wobei das Informationssignal (7) während wenigstens eines Vordergrund-Zeitintervalls innerhalb der Betriebszeit eine Information über eine zeitgleich mit der Verfügbarkeit des zugeordneten Fernsehsignals (1) stattfindende Versteigerung enthält.

2. Verfahren nach Anspruch 1,
**dadurch gekennzeichnet,**
daß das Vordergrund-Zeitintervall in Abhängigkeit von dem Inhalt des zugeordneten Fernsehsignals (1) gewählt wird, wobei als Vordergrund-Zeitintervall vorzugsweise ein solches Zeitintervall gewählt wird, zu dem das zugeordnete Fernsehsignal (1) einer Werbesendung entspricht.

3. Verfahren nach einem der vorherigen Ansprüche,
**dadurch gekennzeichnet,**
daß das Vordergrund-Zeitintervall automatisch gewählt wird, insbesondere durch elektronische Steuerung auf Grundlage eines in dem Fernsehsignal (1) enthaltenen Senderkennungssignals (5).

4. Verfahren nach einem der vorherigen Ansprüche,
**dadurch gekennzeichnet,**
daß das Informationssignal (7) während eines Vordergrund-Zeitintervalls den Videoanteil des zugeordneten Fernsehsignals (1) zumindest zu 70 %, insbesondere zu 100 % überdeckt.

5. Verfahren nach einem der vorherigen Ansprüche,
**dadurch gekennzeichnet,**
daß das Informationssignal (7) während eines Vordergrund-Zeitintervalls in Abhängigkeit von dem Verlauf der Versteigerung geändert wird.

6. Verfahren nach einem der vorherigen Ansprüche,
**dadurch gekennzeichnet,**
daß das Informationssignal (7) während eines Vordergrund-Zeitintervalls ein Textinformationssignal aufweist, das eine an dem Fernsehgerät (3) darstellbare Information über einen Versteigerungsgegenstand (13), ein Mindestgebot (15), ein aktuelles Gebot (17), eine Telephonnummer (19) und/oder eine Internet-Adresse enthält, und/oder
daß das Informationssignal während eines Vordergrund-Zeitintervalls ein Zeitinformationssignal (21) aufweist, das eine an dem Fernsehgerät (3) darstellbare Information über den Zeitablauf des laufenden Vordergrund-Zeitintervalls enthält.

7. Verfahren nach einem der vorherigen Ansprüche,
**dadurch gekennzeichnet,**
daß das Informationssignal (7) während wenigstens eines Hintergrund-Zeitintervalls, das innerhalb der Betriebszeit und außerhalb eines Vordergrund-Zeitintervalls vorgesehen ist, bezüglich der visuellen Darstellung des Fernsehsignals (1) an dem Fernsehgerät (3) vollständig oder im wesentlichen transparent sowie insbesondere ohne eigenen Audioanteil ausgestrahlt wird.

8. Verfahren nach Anspruch 7,
**dadurch gekennzeichnet,**
daß das Informationssignal (7) während eines Hintergrund-Zeitintervalls ein Kennungssignal enthält, das an dem Fernsehgerät insbesondere als visuelles Kennungssymbol (9) ausgestrahlt wird, und/oder
daß das Informationssignal während eines Hintergrund-Zeitintervalls ein Einblendsignal (11) enthält, das an dem Fernsehgerät insbesondere als Nachrichtentext oder Ankündigungstext ausgestrahlt wird.

9. Verfahren nach einem der vorherigen Ansprüche,
**dadurch gekennzeichnet,**
daß das Informationssignal (7) durch eine Videotextseite gebildet ist, und/oder
daß das Informationssignal (7) in das vertikale Synchronisationssignal des zugeordneten Fernsehsignals (1) integriert ist, und/oder daß das Informationssignal (7) durch ein digitales Datensignal des Internet, insbesondere eine Seite des World Wide Web gebildet ist.

10. Verfahren nach einem der vorherigen Ansprüche,
**dadurch gekennzeichnet,**
daß das Informationssignal (7) durch den Fernsehzuschauer individuell abrufbar ist, und/oder
daß das Informationssignal (7) die Information über die Versteigerung während mehrerer zeitlich voneinander abgesetzter Vordergrund-Zeitintervalle enthält.

11. Verfahren zur Erzeugung eines über ein Fernsehgerät (3) ausstrahlbaren Informationssignals (7),
wobei das Informationssignal (7) während einer Betriebszeit zumindest dem Videoanteil eines zugeordneten Fernsehsignals (1) beigemischt wird,
wobei ferner das Informationssignal (7) während wenigstens eines Vordergrund-Zeitintervalls innerhalb der Betriebszeit den Videoanteil des zugeordneten Fernsehsignals (1) zumindest teilweise, vorzugsweise vollständig überdeckt,
wobei ferner als Vordergrund-Zeitintervall ein solches Zeitintervall gewählt wird, zu dem das zugeordnete Fernsehsignal (1) einer Werbesendung entspricht, und
wobei das Informationssignal (7) während des Vordergrund-Zeitintervalls eine Unterhaltungs- oder Nachrichteninformation (23), insbesondere eine Information über ein aktuelles sportliches, gesellschaftliches oder politisches Ereignis, enthält.

12. Verfahren nach Anspruch 11,
**dadurch gekennzeichnet,**
daß das Vordergrund-Zeitintervall automatisch gewählt wird, insbesondere durch elektronische Steuerung auf Grundlage eines in dem Fernsehsignal (1) enthaltenen Senderkennungssignals (5), und/oder
daß das Informationssignal (7) während wenigstens eines Hintergrund-Zeitintervalls, das innerhalb der Betriebszeit und außerhalb eines Vordergrund-Zeitintervalls vorgesehen ist, bezüglich der visuellen Darstellung des Fernsehsignals (1) an dem Fernsehgerät (3) vollständig oder im wesentlichen transparent sowie insbesondere ohne eigenen Audioanteil ausgestrahlt wird.
